# EUROPEAN PATENT SPECIFICATION

(11) **EP 3 448 548 B1**
(45) Date of publication and mention of the grant of the patent: **30.06.2021**
(21) Application number: 17724111.4
(22) Date of filing: 28.04.2017
(51) Int. Cl.: B01D 53/94, B01J 23/60, F01N 3/08, F01N 3/035, F01N 3/20, B01J 29/10, B01J 29/24, B01J 29/46, B01J 29/63, B01J 29/68, B01J 29/76, B01J 35/00, F01N 3/10

(54) **EXHAUST SYSTEM**
ABGASSYSTEM
SYSTÈME D'ÉCHAPPEMENT

(30) Priority: 29.04.2016 US 201662329302 P
(43) Date of publication of application: 06.03.2019
(73) Proprietor: Johnson Matthey Public Limited Company, London EC4A 4AB (GB)
(72) Inventor: BROWN, Gavin, Royston Hertfordshire SG8 5HE (GB); CHIFFEY, Andrew, Royston Hertfordshire SG8 5HE (GB)
(74) Representative: Nunn, Andrew Dominic
(86) International application number: PCT/IB2017/052486
(87) International publication number: WO 2017/187412

(56) References cited:
- EP-A1- 2 191 892
- WO-A1-2011/080525
- WO-A1-2014/080220
- WO-A2-2015/082892
- JP-A- 2007 252 995

## Description

The present invention relates to exhaust systems for internal combustion (IC) engines, to catalytic monolith substrates for use in such exhaust systems, to methods of making such catalytic monolith substrates and to methods of treating exhaust gases.

Internal combustion engines are a potential source of pollutants. It would be desirable to reduce the emission of pollutants from internal combustion engines. Increasingly strict environmental regulations have come into force, and further regulations are planned, in economies such as the European Union, the USA and throughout the world to reduce the emission of pollutants into the atmosphere from various sources, in particular, internal combustion engines.

Pollutants of concern include NOₓ, carbon monoxide, particulates, hydrocarbons, hydrogen sulfide and ammonia. There have been a number of solutions proposed for reducing emissions from internal combustion engines.

WO-A-2010/004320 discloses an exhaust system for a lean-burn internal combustion engine comprising a first substrate monolith comprising a catalyst for oxidising nitric oxide (NO) followed downstream by a wall-flow filter having inlet channels and outlet channels, where the inlet channels comprise a NOx absorber catalyst and the outlet channels comprise a catalyst for selective catalytic reduction of nitrogen oxides with nitrogenous reductant.

WO-A-2012/175948 discloses an exhaust system with a lean NOx trap and a catalyzed substrate for an internal combustion engine for treating a range of pollutants. The catalyzed substrate has a first zone and a second zone, wherein the first zone comprises a platinum group metal loaded on a support and the second zone comprises copper or iron loaded on a zeolite. The first zone or second zone additionally comprises a base metal oxide or a base metal loaded on an inorganic oxide.

WO-A-2005/014146 discloses a catalyst arrangement using a single monolith and a method of purifying the exhaust gas of internal combustion engines operated under lean conditions. A thin-walled, porous carrier is coated on one side with a nitrogen oxide storage catalyst and on the other side with an SCR catalyst.

Nitrogen oxides (NOₓ) can be produced, for example, when nitrogen in the air reacts with oxygen within an IC engine. Such nitrogen oxides can include nitrogen monoxide and/or nitrogen dioxide.

One catalytic method to reduce NOₓ emissions is a lean NOₓ trap with an oxidation catalyst which efficiently converts NOₓ produced in an internal combustion engine to nitrogen, although some NOₓ in the exhaust gas can slip through as the trap becomes saturated. Some byproducts of concern can also be produced by a lean NOₓ trap, for example, non-selective reduction pathways can result in the production of ammonia.

A number of selective catalytic reduction (SCR) methods have been developed in an attempt to reduce NOₓ emissions by converting NOₓ to nitrogen and water. Active SCR uses a reductant (for example, a nitrogenous reductant such as ammonia or urea) which is added to a stream of exhaust gas and becomes adsorbed on to a catalyst. Usually, the nitrogenous reductant converts to ammonia and, in the presence of the SCR catalyst, a number of reactions occur, with the result that NOₓ is converted to elemental nitrogen and water.

WO-A-2015/036797 discloses an exhaust system using active selective catalytic reduction for treating an exhaust gas from an internal combustion engine and a method for treating such exhaust gas.

Passive SCR does not require a separate device to add reductant to the exhaust gas stream and can use a lean NOₓ adsorber trap (LNT) and/or a selective catalytic reduction catalyst. When exhaust gas is produced in lean conditions (low fuel/oxygen ratio), NOₓ is adsorbed on the LNT. The LNT can be regenerated by contacting it intermittently with enriched (high fuel/oxygen ratio) exhaust gas that can be produced under the control of engine management systems. Such enrichment promotes desorption of adsorbed NOₓ and reduction of NOₓ on a reduction catalyst present in the LNT. The enriched exhaust gas also generates ammonia (NH₃) from NOx. This ammonia can become adsorbed on an SCR catalyst downstream and is then available for reduction of NOₓ that slips past the LNT in lean exhaust gas conditions. The efficiency of the SCR catalyst is dependent on the NO₂/NOₓ ratio and on temperature.

NOₓ traps can store high concentrations of sulphur during standard operation. This sulphur needs to be removed periodically in order to maintain performance of the NOₓ trap. High temperature lean/rich cycling is used to desulphate the catalyst. However, this process causes the release of H₂S to the environment. Although H₂S is currently not a regulated pollutant, it would be beneficial to provide a means of reducing hydrogen sulphide emissions.

WO-A-2014/080220 discloses a zoned catalyst on a monolithic substrate for controlling hydrogen sulphide gas formed in a lean NOₓ trap during desulphation.

It is, however, difficult to reduce H₂S release whilst maintaining good oxidation performance of catalysts and maintaining good filtration of particulates.

US-A-2011/0014099 discloses a catalytically active particulate filter which has a hydrogen sulphide block function.

US-A-2008/214390 discloses a catalyst for purifying an exhaust gas which is capable of restraining emission of hydrogen sulphide.

US-A-2009/082199 discloses a catalyst adapted to purify exhaust gases from an IC engine and in particular which is capable of reducing emission of hydrogen sulphide. The platinum group metal catalysts and the oxides are described as being separated in this disclosure to avoid deterioration/poisoning of the PGM catalyst.

Separation of the H₂S-reducing materials and PGM in a catalyst washcoat for use on a filter substrate can result in significant reduction in porosity of the filter substrate because multi-layer or thick catalysts tend to block channels and pores in filter substrates. Reduction in porosity tends to reduce the effectiveness of filter substrates as particle filters.

There is a continuing need to reduce emissions of H₂S without also reducing the effectiveness of the catalytic removal of other pollutants such as particulates, hydrocarbons and CO, in particular as new regulations reduce the allowable level of emissions from IC engines.

It is an aim of the present invention to address these issues.

The present invention accordingly provides, in a first aspect, an exhaust system for an internal combustion engine, the exhaust system comprising,
a. a lean NOₓ trap, and
b. a wall flow monolithic substrate having a pre-coated porosity of 40% or greater, and comprising an oxidation catalytic zone, the oxidation catalytic zone comprising a platinum group metal loaded on a first support, the first support comprising at least one inorganic oxide and a zinc compound, wherein the first support comprises at least one alkaline earth metal compound at a loading in the range of 3.18 to 7.06 g/L (90 to 200 g/ft³) and wherein the or each alkaline earth metal compound comprises an oxide, carbonate and/or hydroxide of magnesium, calcium, strontium or barium or a mixture of any two or more of these compounds, preferably wherein the zinc compound is selected from zinc oxide, zinc nitrate, zinc carbonate, zinc hydroxide or a mixture of two or more thereof.

This is greatly advantageous, because such an exhaust system results in reduction of emissions of NOₓ, H₂S, particulates, CO and hydrocarbons.

The use of a zinc compound in the first support provides excellent reduction in H₂S slip whilst surprisingly maintaining efficient oxidation of CO and hydrocarbons (HC), even when the zinc compound is combined with the PGM in the PGM washcoat. Surprisingly, zinc does not poison the PGM. Therefore, the use of Zn allows the oxidation catalysts to be applied to a wall flow filter in one washcoat layer (i.e. without zoning) without unacceptably increasing back pressure. Thus, zinc compounds can be used in any suitable location in the filter. This is greatly advantageous because it allows the use of a wall flow monolithic substrate with relatively high porosity to provide effective oxidation catalytic activity in combination with good particulate filtering even with more challenging recent drive test cycles for IC engines in vehicles. In addition, use of zinc compounds is beneficial because it provides lower light off temperature for HC and CO oxidation than other metal compounds (for example Mn).

The inorganic oxide of the first support can comprise a cerium compound, preferably cerium oxide or a mixed oxide of cerium and zirconium. Thus, the inorganic oxide of the first support can comprise ceria-zirconia mixed oxides which are generally more thermally durable than ceria alone.

Alternatively, or additionally, the first support can comprise alumina and/or an aluminate.

A preferred first support comprises alumina and a ceria-zirconia mixed oxide (preferably milled to a d₉₀ particle size of <25 micron, more preferably < 15 micron).

Examples of other suitable inorganic oxides that can be used in the first support include spinels, silica-alumina, titania, zirconia, alumina-zirconia, and combinations thereof. The inorganic oxide can comprise an aluminate, for example, magnesium aluminate.

The inorganic oxide or inorganic oxides of the first support will usually comprise particulate inorganic oxides, preferably having a particle size (e.g. d₉₀ particle size) in the range 1 µm to 25 µm, more preferably 2 µm to 20 µm, even more preferably 2 µm to 15 µm, or 2 µm to 12 µm and most preferably 4 µm to 10 µm.

The first support can comprise the zinc compound at a loading in the range of 0.177 to 17.66 g/L (5 to 500 g/ft³), preferably 1.765 to 14.13 g/L (50 to 400 g/ft³), more preferably 3.53 to 12.36 g/L (100 to 350 g/ft³), most preferably 5.30 to 10.59 g/L (150 to 300 g/ft³), based on the weight of zinc.

The platinum group metal can be selected from platinum, palladium, and rhodium, or mixtures thereof. The preferred platinum group metal can comprise a mixture of platinum and palladium in a Pt:Pd weight ratio in the range 0.5:1 to 7:1, preferably 1:1 to 6:1, more preferably 1:1 to 4:1, most preferably 1:1 to 3:1. This can provide an effective catalyst for the oxidation catalytic zone.

It is preferred that the total platinum group metal loading in the oxidation catalytic zone is in the range 0.177 to 3.53 g/L (5 to 100 g/ft³), preferably 0.177 to 1.766 g/L (5 to 50 g/ft³, more preferably in the range in the range 0.177 to 1.413 g/L (5 to 40 g/ft³), even more preferably in the range 0.177 to 0.883 g/L (5 to 25 g/ft³), and most preferably in the range 0.247 to 0.530 g/L (7 to 15 g/ft³).

The pre-coated porosity of the wall flow monolithic substrate is 40% or greater, 41% or greater, 42% or greater preferably 43% or greater. Higher porosities of 47% or greater, 49% or greater, 51% or greater, 55% or greater and 59% or greater, 60% or greater, 61% or greater or 62% or greater can also be useful. Generally, the pre-coated porosity of the wall flow monolithic substrate will be 75% or lower, usually 70% or lower, preferably 65% or lower, more preferably 60% or lower, even more preferably 55% or lower and most preferably 49% or lower. The pre-coated porosity of the wall flow monolithic substrate may be in the ranges 40% to 60%, 41% to 55%, 42% to 50% or 42% to 45%.

This is advantageous because such relatively high porosities enable good exhaust gas flow through the channel walls in the monolithic substrate effectively enhancing the interaction between the oxidation catalytic zone and the exhaust gases and hence conversion but, because of the advantageous nature of the zinc-containing oxidation catalyst, without increasing back pressure unacceptably.

The oxidation catalyst zone further comprises at least one alkaline earth metal compound. Most preferably, the alkaline earth metal compound comprises a barium compound. The or each alkaline earth metal compound comprises an oxide, carbonate and/or hydroxide of magnesium, calcium, strontium or barium or a mixture of any two or more of these compounds.

Although the alkaline earth metal species can be present as an oxide during preparation of the catalyst, in the presence of air or lean engine exhaust gas some or most of the alkaline earth metal species, for example barium, can be in the form of oxide, carbonate and/or the hydroxide.

The first support comprises the alkaline earth metal (preferably barium) at a loading in the range of 3.18 to 7.06 g/L (90 to 200 g/ft³).

Advantageously, the oxidation catalyst zone can be applied as a single layer to reduce the thickness of the catalytic layer in the wall flow filter and thereby reduce back pressure in the high porosity wall flow filter.

The washcoat loading of the oxidation catalyst zone can be in the range 3.05 to 183.1 g/L (0.05 to 3.0 g/in³), preferably in the range 6.10 to 122.05 g/L (0.1 to 2.0 g/in³).

It can be advantageous that the exhaust system of the present invention further comprises a selective catalytic reduction zone on a monolithic substrate where the selective catalytic reduction zone comprises copper or iron loaded on a second support and the second support comprises a molecular sieve.

The molecular sieve can be selected from a beta zeolite (BEA), a faujasite (FAU) (such as an X-zeolite or a Y-zeolite, including NaY and USY), an L-zeolite, a chabazite, a ZSM zeolite (e.g., ZSM-5 (MFI), ZSM-48 (MRE)), a so-called small pore molecular sieve having a maximum pore opening of eight tetrahedral atoms, preferably CHA, ERI or AEI, an SSZ-zeolite (e.g., SSZ-13 (a CHA), SSZ-41, SSZ-33, SSZ-39), a ferrierite (FER), a mordenite (MOR), an offretite (OFF), a clinoptilolite (HEU), a silicalite, an aluminiophosphate molecular sieve (including metalloaluminophosphates such as SAPO-34 (a CHA)), a mesoporous zeolite (e.g., MCM-41, MCM-49, SBA-15), or mixtures thereof; more preferably, the zeolite is a beta zeolite (BEA), a ferrierite (FER), or a small pore molecular sieve selected from CHA, ERI and AEI; most preferably aluminosilicate CHA or AEI.

The washcoat loading of the selective catalytic reduction zone, if present, can be in the range 30.5 to 183.1 g/L (0.5 to 3.0 g/in³) (based on the weight of zeolite and Cu (or Fe)). Cu is preferred in the selective catalytic reduction zone.

The oxidation catalyst zone and the selective catalytic reduction zone (if present) can each be on different portions of the same monolithic wall flow substrate. This is particularly advantageous where there is restricted space in an exhaust system e.g. of a vehicle and allows compact and less complex systems to be provided.

A great advantage of the use of a wall flow monolithic is that the monolith acts as a filter substrate reducing particulate emissions very effectively. A wall flow monolithic substrate usually comprises an inlet end, an outlet end, with an axial length extending between the inlet end and the outlet end, and a plurality of channels defined by internal walls of the wall flow substrate. The channels of the wall-flow filter are alternately blocked from either the inlet or outlet end so that the channels comprise inlet channels having an open inlet end and a closed outlet end and outlet channels having a closed inlet end and open outlet end. This ensures that the exhaust gas stream enters a channel from the inlet end, flows through the porous channel walls, and exits the filter from a different channel leading to the outlet end. Particulates in the exhaust gas stream are effectively trapped in the filter.

The oxidation catalyst zone can be disposed in channels of the wall flow monolithic substrate from one end thereof and the selective catalytic reduction zone can be disposed in channels of the wall flow monolithic substrate from the other end thereof.

Where the the oxidation catalyst zone and the selective catalytic reduction zone are on portions of the same monolithic wall flow substrate, the oxidation catalyst zone can extend over between 10% and 90% of the axial length of the monolithic substrate and the selective catalytic reduction zone extends over between 90% and 10%.

The axial length of the oxidation catalyst zone and the axial length of the selective catalytic reduction zone can overlap by 20% or less of a total axial length of the monolithic substrate.

There can be a gap over the axial length of the monolithic substrate between the end of the oxidation catalytic zone and the start of the selective catalytic reduction zone.

Preferably, the wall flow monolithic substrate comprises an inlet end having inlet channels and an outlet end having outlet channels and the oxidation catalyst zone is on and/or within the walls of the inlet channels of the inlet end of the monolithic substrate and/or within the walls of the outlet channels of the outlet end of the monolithic substrate.

The oxidation catalyst zone can be upstream or downstream of the selective catalytic zone, but is preferably upstream. The oxidation catalytic zone is usually present on the inlet channels of the inlet end of the wall flow monolithic substrate and the selective catalytic reduction zone is present on the outlet channels of the outlet end of the wall flow monolithic substrate. This orientation is preferable, especially in higher temperature exhaust systems, because it is advantageous for the SCR zone to be in the cooler location relative to the oxidation catalytic zone. Under such relatively cool conditions, the SCR zone is more effective at reducing ammonia slip.

It is preferred that the pores of the wall flow monolithic substrate have a diameter (mean pore size, MPS) in the range 9 µm to 25 µm. This range of pore diameter is suitable for washcoat coating by which the catalysts and supports can be applied to the walls of the channels, enabling a relatively high surface area for catalytic activity without increasing back pressure unacceptably. MPS can be determined by mercury porosimetry.

The present invention provides, in a second aspect, a catalytic wall flow monolithic substrate, the wall flow monolithic substrate having a oxidation catalyst zone thereon, the wall flow monolithic substrate having a pre-coated porosity of 40% or greater, the oxidation catalyst zone comprising a platinum group metal loaded on a first support, the first support comprising at least one inorganic oxide, and a zinc compound, wherein the first support comprises at least one alkaline earth metal compound at a loading in the range of 3.18 to 7.06 g/L (90 to 200 g/ft³) and wherein the or each alkaline earth metal compound comprises an oxide, carbonate and/or hydroxide of magnesium, calcium, strontium or barium or a mixture of any two or more of these compounds.

The optional and preferred features of the second aspect of the invention correspond to those optional and preferred features of the first aspect.

Usually, the zones can be deposited on the substrate using washcoat procedures. A general process for preparing the monolith substrate using a washcoat procedure is set out below.

Washcoating is preferably performed by slurrying (e.g. in water) solid particles making up the support so that they have a particle size of less than 20 microns in an average diameter (e.g. d₉₀). The slurry preferably contains between 4 to 40 weight percent solids, more preferably between 6 to 30 weight percent solids. Additional components, such as stabilizers or promoters can also be incorporated in the slurry as a mixture of water soluble or water-dispersible compounds or complexes. The substrate can then be coated one or more times with the slurry such that there will be deposited on the substrate the desired loading of catalytic materials.

The platinum group metal can be added to the support-coated substrate monolith by any known means, including impregnation, adsorption, or ion-exchange of a platinum compound (such as platinum nitrate), but is conveniently added to the washcoat slurry as a soluble platinum group metal salt or salts.

A method of making a catalysed monolithic substrate according to the first aspect comprises the steps of providing a wall flow monolithic substrate, the wall flow monolithic substrate having a pre-coated porosity of 40% or greater, preparing a oxidation catalyst zone washcoat comprising a source of a platinum group metal, a first support comprising at least one inorganic oxide and a source of a zinc compound, wherein the or each alkaline earth metal compound comprises an oxide, carbonate and/or hydroxide of magnesium, calcium, strontium or barium or a mixture of any two or more of these compounds, and applying the oxidation catalyst zone washcoat to a first portion of the monolithic substrate, wherein the first support comprises at least one alkaline earth metal compound at a loading in the range of 3.18 to 7.06 g/L (90 to 200 g/ft³).

In a third aspect, the present invention provides, a method of treating exhaust gases from an internal combustion engine, the method comprising flowing the exhaust gas through an exhaust system according to the first aspect, wherein the exhaust gas comprises a lean exhaust gas intermittently becoming rich.

The terms "lean" and "rich" are relative to the stoichiometric point of fuel combustion in the engine, i.e. the air to fuel ratio by weight that combusts the fuel perfectly as hydrocarbon plus oxygen to carbon dioxide and water. Lean exhaust gases are formed wherein air is in excess of this stoichiometric point, rich exhaust gases are formed wherein fuel is in excess.

In a fourth aspect, the present invention provides, a compression ignition engine fitted with an exhaust system according to the first aspect.

In a fifth aspect, the present invention according provides, a vehicle comprising a compression ignition engine and an exhaust system according to the fourth aspect.

The above and other characteristics, features and advantages of the present invention will become apparent from the following detailed description, taken in conjunction with the accompanying drawings and the Examples, which illustrate, by way of example, the principles of the invention.

Reference throughout this specification to "an aspect" means that a particular feature, structure or characteristic described in connection with the aspect is included in at least one aspect of the present invention. Thus, appearances of the phrase "in an aspect" in various places throughout this specification are not necessarily all referring to the same aspect, but can refer to different aspects. Furthermore, the particular features, structures or characteristics of any aspect of the invention can be combined in any suitable manner, as would be apparent to one of ordinary skill in the art from this disclosure, in one or more aspects.

In the description provided herein, numerous specific details are set forth. However, it is understood that the invention can be practised without these specific details. In other instances, well-known methods, structures and techniques have not been shown in detail in order not to obscure an understanding of this description.

In order that the present invention can be better understood, reference is made to accompanying drawings, in which:
Figure 1 illustrates schematically a first exhaust system according to the present invention.
Figure 2 illustrates schematically a second exhaust system according to the present invention.
Figure 3 shows a graph of CO conversion as function of inlet temperature for an oxidation catalyst according to the Examples.
Figure 4 graph of HC conversion as function of inlet temperature for an oxidation catalyst according to the Examples.

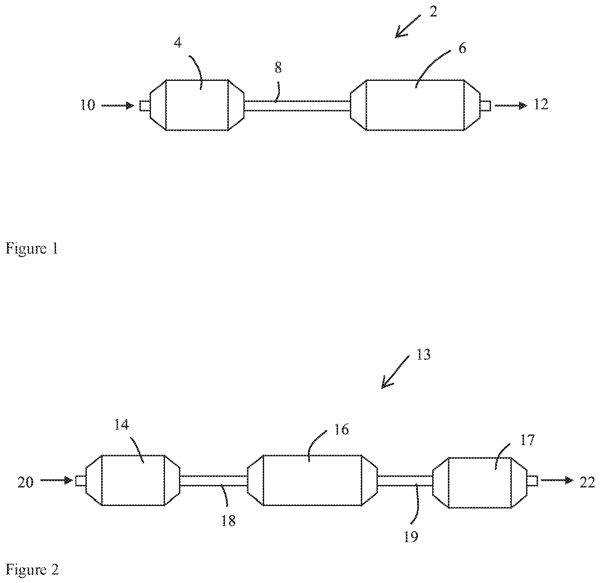

Figure 1 shows schematically a first exhaust system 2 of the present invention. The exhaust system 2 comprises a first monolithic substrate 4 which forms a lean NOₓ trap (LNT) catalyst. The exhaust gases from the engine (not shown) upstream of the first monolithic substrate / lean NOₓ trap 4 enter the first monolithic substrate 4 through inlet 10 and exit the first monolithic substrate 4 through pipe 8. The exhaust gases then enter a second monolithic substrate 6 before exiting through outlet 12. Downstream of outlet 12 there can be other catalytic zones or the exhaust gases can be released to atmosphere.

The second monolithic substrate 6 is a SiC wall-flow filter substrate of 2.5 litre volume having 46.5 cells per square centimetre (300 cells per square inch), a wall thickness of 10 Mil (thousands of an inch) and 42% porosity. The wall-flow substrate has a honeycomb structure with many small, parallel thin-walled channels running axially through the substrate, with the channels of the wall flow substrate being alternately blocked, which allows the exhaust gas stream to enter a channel from the inlet, then flow through the porous channel walls, and exit the filter from a different channel leading to the outlet. The second monolithic substrate 6 contains an oxidation catalytic zone of a platinum group metal and a support of alumina and ceria-zirconia mixed oxide milled to a d₉₀ particle size of <15 micron and zinc oxide provided on both the walls of the inlet channels at the inlet end of the second monolithic substrate 6 and on the walls of the outlet channels at the outlet end of the second monolithic substrate 6. The exhaust system of Figure 1 can be produced using a wall flow monolithic oxidation catalyst produced as described below in Example 2.

Figure 2 shows schematically a second exhaust system 13 of the present invention. The exhaust system 13 comprises a first monolithic substrate 14 which forms a lean NOₓ trap catalyst. As in Figure 1, the exhaust gases from the engine (not shown) upstream of the first monolithic substrate / lean NOₓ trap 14 enter the first monolithic substrate 14 through inlet 20 and exit the first monolithic substrate 14 through pipe 18. The exhaust gases then enter a second monolithic substrate 16 before exiting through pipe 19 to a third monolithic substrate 17 and then through outlet 22. Downstream of outlet 22 there can be other catalytic zones or the exhaust gases can be released to atmosphere.

The second monolithic substrate 16 is a filter, wall flow monolithic substrate having an oxidation catalytic zone provided on the walls of the channels. The third monolithic substrate 17 is a flow through monolithic substrate having a uniform coating throughout of a selective catalytic reduction zone.

The following Examples are provided by way of illustration only.

### Comparative Example 1

A slurry was prepared using alumina and ceria-zirconia mixed oxide milled to a d₉₀ particle size of <15 micron. Appropriate amounts of soluble Pt and Pd salts were added to give a final coated catalyst loading of 0.353 g/L (10 g/ft³) with a Pt:Pd weight ratio of 2:1 and the mixture stirred to homogenise. The coating slurry was applied to the entire volume of a 2.5 litre volume SiC wall-flow filter substrate having 46.5 cells per square centimetre (300 cells per square inch), a wall thickness of 0.254 mm (10 Mil (thousands of an inch)) and 42% porosity. The coating was dried using forced air flow and calcined at 500°C.

### Reference Example 2 (ZnO) (not according to the invention)

A slurry was prepared using alumina and ceria-zirconia mixed oxide milled to a d₉₀ particle size of <15 micron. Appropriate amounts of soluble Pt and Pd salts were added to give a final coated catalyst loading of 0.353 g/L (10 g/ft³) with a Pt:Pd weight ratio of 2:1. Zn oxide was added to the slurry and the mixture stirred to homogenise. The coating slurry was applied to the entire volume of a 2.5 litre volume SiC wall-flow filter substrate having 46.5 cells per square centimetre (300 cells per square inch), a wall thickness of 0.254 mm (10 Mil (thousands of an inch)) and 42% porosity. The coating was dried using forced air flow and calcined at 500°C. The coated filter had a zinc loading of 8.83 g/L (250 g/ft³).

### Comparative Example 3 (MnO₂)

A slurry was prepared using alumina and ceria-zirconia mixed oxide milled to a d₉₀ particle size of <15 micron. Appropriate amounts of soluble Pt and Pd salts were added to give a final coated catalyst loading of 0.353 g/L (10 g/ft³) with a Pt:Pd weight ratio of 2:1. Mn dioxide was added to the slurry and the mixture stirred to homogenise. The coating slurry was applied to the entire volume of a 2.5 litre volume SiC wall-flow filter substrate having 46.5 cells per square centimetre (300 cells per square inch), a wall thickness of 0.254 mm (10 Mil (thousands of an inch)) and 42% porosity. The coating was dried using forced air flow and calcined at 500°C. The coated filter had a manganese loading of 8.83 g/L (250 g/ft³).

### Comparative Example 4 (Mn(NO₃)₂)

A slurry was prepared using alumina and ceria-zirconia mixed oxide milled to a d₉₀ particle size of <15 micron. Appropriate amounts of soluble Pt and Pd salts were added to give a final coated catalyst loading of 0.353 g/L (10 g/ft³) with a Pt:Pd weight ratio of 2:1. Manganese nitrate was added to the slurry and the mixture stirred to homogenise. The coating slurry was applied to the entire volume of a 2.5 litre volume SiC wall-flow filter substrate having 46.5 cells per square centimetre (300 cells per square inch), a wall thickness of 0.254 mm (10 Mil (thousands of an inch)) and 42% porosity. The coating was dried using forced air flow and calcined at 500°C. The coated filter had a manganese loading of 8.83 g/L (250 g/ft³).

### H₂S Simulated Catalyst Activity Testing (SCAT) Procedure

The H₂S controlling performance of the coated filters was determined using a laboratory reactor and a simulated exhaust gas. Lean and rich exhaust gas mixtures were used to represent those produced during the desulphation of a lean NOₓ trap. All samples were previously aged under hydrothermal conditions of 800°C for 16 hours. Core samples were taken and tested on the lab reactor. The reactor was heated to the first evaluation temperature and a lean gas mix was passed through the sample for 20 seconds. The gas mix was then switched to a rich gas mix for 20 seconds. This cycle of alternating lean and rich gas mixes was repeated during the test. Gas mix concentrations are given in Table 1, with the balance being nitrogen.

**Table 1**

| | **Lean gas mix** | **Rich gas mix** |
|---|---|---|
| CO₂ | 14% | 14% |
| HC | 120 ppm (C₁) | 2000 ppm (C₁) |
| O₂ | 1.7% | 0 |
| H₂O | 5% | 5% |
| H₂ | 0 | 0.07% |
| CO | 0 | 0.24% |
| H₂S | 0 | 500 ppm |

The concentration of H₂S downstream of the filter sample was continuously measured and the peak concentration of H₂S determined. This value is termed H₂S slip. The average H₂S slip measured over 5 cycles of lean/rich operation is shown in Table 2 for each of the catalysts as a function of inlet temperature.

### HC/CO Oxidation SCAT Procedure

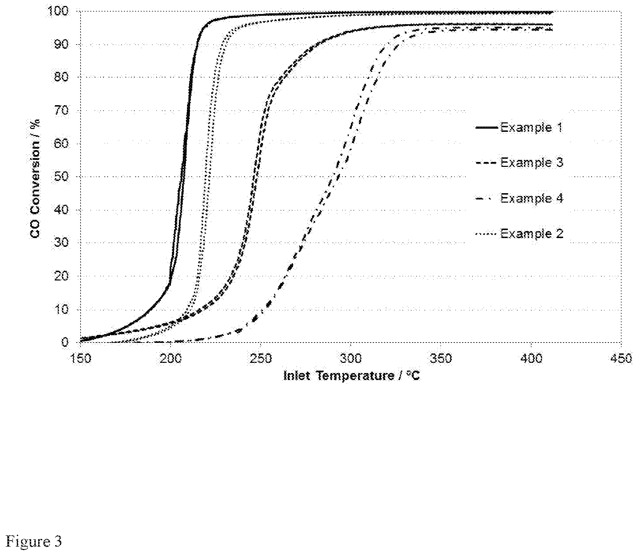

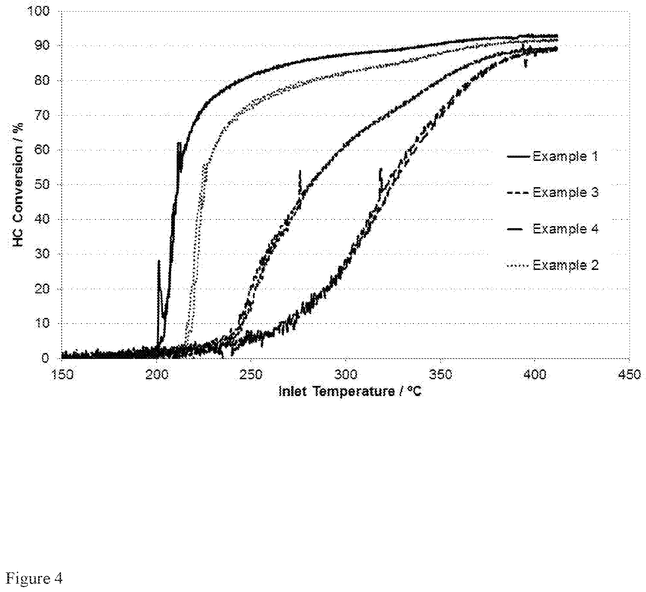

The catalysed substrate monoliths of Example 1, Example 2, Example 3 and Example 4 were tested for CO and HC oxidation performance. The aged cores were tested in a simulated catalyst activity testing (SCAT) gas apparatus using the inlet gas mixtures shown in Table 3, the balance is nitrogen. The results for the tests for each Example are shown in Figures 3 and 4.

**Table 2**

| **Inlet Temperature (°C)** | **Average Peak H₂S slip (ppm)** | | | |
|---|---|---|---|---|
| | **Example 1** | **Example 2 (ZnO)** | **Example 3 (MnO₂)** | **Example 4 (Mn(NO₃)₂)** |
| 300 | 446 | 164 | 239 | 189 |
| 400 | 430 | 162 | 105 | 177 |
| 500 | 402 | 116 | 102 | 165 |
| 600 | 362 | 54 | 3 | 150 |
| 650 | 417 | 52 | 1 | 138 |

**Table 3**

| **Gas Component** | **Quantity in Inlet Gas Mixture Composition** |
|---|---|
| CO | 1500 ppm |
| HC (as Ci) | 430 ppm |
| NO | 100 ppm |
| CO₂ | 4% |
| H₂O | 4% |
| O₂ | 14% |
| Space velocity | 55000/hour |

The light off temperatures for Example 1, Example 2, Example 3 and Example 4 for HC and CO oxidation are shown in Table 4, below.

**Table 4**

| | **HC T50** | **CO T50** |
|---|---|---|
| Example 1 | 211 °C | 206 °C |
| Example 2 (ZnO) | 224 °C | 220 °C |
| Example 3 (MnO₂) | 281 °C | 246 °C |
| Example 4 (Mn(NO₃)₂) | 321 °C | 289 °C |

## Claims

1. An exhaust system for an internal combustion engine, the exhaust system comprising:
a. a lean NOx trap; and
b. a wall flow monolithic substrate having a pre-coated porosity of 40% or greater, and comprising an oxidation catalytic zone, the oxidation catalytic zone comprising a platinum group metal loaded on a first support, the first support comprising at least one inorganic oxide and a zinc compound, wherein the first support comprises at least one alkaline earth metal compound at a loading in the range of 3.18 to 7.06 g/L (90 to 200 g/ft³) and wherein the or each alkaline earth metal compound comprises an oxide, carbonate and/or hydroxide of magnesium, calcium, strontium or barium or a mixture of any two or more of these compounds, preferably wherein the zinc compound is selected from zinc oxide, zinc nitrate, zinc carbonate, zinc hydroxide or a mixture of two or more thereof.

2. An exhaust system according to claim 1, wherein the inorganic oxide comprises cerium oxide.

3. An exhaust system as claimed in any one of the preceding claims, wherein the first support further comprises alumina and/or an aluminate.

4. An exhaust system as claimed in any one of the preceding claims, wherein the first support comprises alumina and ceria-zirconia mixed oxide.

5. An exhaust system according to any one of the preceding claims, wherein the platinum group metal is selected from the group consisting of platinum, palladium, rhodium, and mixtures of any two or more thereof.

6. An exhaust system according to any one of the preceding claims, wherein the oxidation catalyst zone is applied to be in a single layer.

7. An exhaust system according to any one of the preceding claims, further comprising a selective catalytic reduction zone on a monolithic substrate, the selective catalytic reduction zone comprising copper or iron loaded on a second support, the second support comprising a molecular sieve.

8. An exhaust system according to claim 7, wherein: (i) the oxidation catalyst zone is on a first wall flow monolithic substrate and the selective catalytic reduction zone is on a second monolithic substrate; or (ii) the oxidation catalyst zone and the selective catalytic reduction zone are each on portions of the same wall flow monolithic substrate, preferably wherein the oxidation catalyst zone is disposed in channels of the wall flow monolithic substrate from one end thereof and the selective catalytic reduction zone is disposed in channels of the wall flow monolithic substrate from the other end thereof.

9. An exhaust system according to any preceding claim, wherein the zinc compound has a particle size according to d₉₀ in the range 1 to 25 µm.

10. An exhaust system according to any preceding claim, wherein the platinum group metal is at a loading in the range of 0.247 to 0.530 g/L (7 to 15 g/ft³).

11. A catalytic wall flow monolithic substrate, the wall flow monolithic substrate having a oxidation catalyst zone thereon, the wall flow monolithic substrate having a pre-coated porosity of 40% or greater, the oxidation catalyst zone comprising a platinum group metal loaded on a first support, the first support comprising at least one inorganic oxide, and a zinc compound, wherein the first support comprises at least one alkaline earth metal compound at a loading in the range of 3.18 to 7.06 g/L (90 to 200 g/ft³) and wherein the or each alkaline earth metal compound comprises an oxide, carbonate and/or hydroxide of magnesium, calcium, strontium or barium or a mixture of any two or more of these compounds.

12. A method of treating exhaust gases from an internal combustion engine, the method comprising flowing the exhaust gas through an exhaust system according to any one of claims 1 to 10, wherein the exhaust gas comprises a lean exhaust gas intermittently becoming rich.

13. A compression ignition engine fitted with an exhaust system according to any one of claims 1 to 10.

14. A vehicle comprising a compression ignition engine according to claim 13.

## Patentansprüche

1. Abgasanlage für einen Verbrennungsmotor, wobei die Abgasanlage umfasst:
a. einen NOₓ-Speicherkatalysator und
b. ein monolithisches Wandflusssubstrat, das eine vorbeschichtete Porosität von 40 % oder höher aufweist und eine oxidationskatalytische Zone umfasst, wobei die oxidationskatalytische Zone ein Platingruppenmetall umfasst, das auf einen ersten Träger geladen ist, wobei der erste Träger mindestens ein anorganisches Oxid und eine Zinkverbindung umfasst, wobei der erste Träger mindestens eine Erdalkalimetallverbindung in einer Beladung im Bereich von 3,18 bis 7,06 g/L (90 bis 200 g/ft³) umfasst und wobei die oder jede Erdalkalimetallverbindung ein Oxid, Carbonat und/oder Hydroxid von Magnesium, Calcium, Strontium oder Barium oder ein Gemisch von beliebigen zwei oder mehr dieser Verbindungen umfasst, vorzugweise wobei die Zinkverbindung aus Zinkoxid, Zinknitrat, Zinkcarbonat, Zinkhydroxid oder einem Gemisch von zwei oder mehr davon ausgewählt ist.

2. Abgasanlage nach Anspruch 1, wobei das anorganische Oxid Ceroxid umfasst.

3. Abgasanlage nach einem der vorhergehenden Ansprüche, wobei der erste Träger weiterhin Aluminiumoxid und/oder ein Aluminat umfasst.

4. Abgasanlage nach einem der vorhergehenden Ansprüche, wobei der erste Träger Aluminiumoxid und Cerdioxid-Zirconiumdioxid-Mischoxid umfasst.

5. Abgasanlage nach einem der vorhergehenden Ansprüche, wobei das Platingruppenmetall aus der Gruppe bestehend aus Platin, Palladium, Rhodium und Gemischen von beliebigen zwei oder mehr davon ausgewählt ist.

6. Abgasanlage nach einem der vorhergehenden Ansprüche, wobei die Oxidationskatalysatorzone aufgebracht wird, so dass sie in einer einzigen Schicht ist.

7. Abgasanlage nach einem der vorhergehenden Ansprüche, weiterhin umfassend eine selektive katalytische Reduktionszone auf einem monolithischen Substrat, wobei die selektive katalytische Reduktionszone Kupfer oder Eisen umfasst, das auf einen zweiten Träger geladen ist, wobei der zweite Träger ein Molekularsieb umfasst.

8. Abgasanlage nach Anspruch 7, wobei: (i) die Oxidationskatalysatorzone auf einem ersten monolithischen Wandflusssubstrat ist und die selektive katalytische Reduktionszone auf einem zweiten monolithischen Substrat ist; oder (ii) die Oxidationskatalysatorzone und die selektive katalytische Reduktionszone jeweils auf Abschnitten desselben monolithischen Wandflusssubstrats sind, vorzugweise wobei die Oxidationskatalysatorzone in Kanälen des monolithischen Wandflusssubstrats von einem Ende davon angeordnet ist und die selektive katalytische Reduktionszone in Kanälen des monolithischen Wandflusssubstrats von dem anderen Ende davon angeordnet ist.

9. Abgasanlage nach einem vorhergehenden Anspruch, wobei die Zinkverbindung eine Teilchengröße gemäß d₉₀ im Bereich von 1 bis 25 µm aufweist.

10. Abgasanlage nach einem vorhergehenden Anspruch, wobei das Platingruppenmetall in einer Beladung im Bereich von 0,247 bis 0,530 g/L (7 bis 15 g/ft³) ist.

11. Katalytisches monolithisches Wandflusssubstrat, wobei das monolithische Wandflusssubstrat eine Oxidationskatalysatorzone darauf aufweist, wobei das monolithische Wandflusssubstrat eine vorbeschichtete Porosität von 40 % oder höher aufweist, wobei die Oxidationskatalysatorzone ein Platingruppenmetall umfasst, das auf einen ersten Träger geladen ist, wobei der erste Träger mindestens ein anorganisches Oxid und eine Zinkverbindung umfasst, wobei der erste Träger mindestens eine Erdalkalimetallverbindung in einer Beladung im Bereich von 3,18 bis 7,06 g/L (90 bis 200 g/ft³) umfasst und wobei die oder jede Erdalkalimetallverbindung ein Oxid, Carbonat und/oder Hydroxid von Magnesium, Calcium, Strontium oder Barium oder ein Gemisch von beliebigen zwei oder mehr dieser Verbindungen umfasst.

12. Verfahren zur Behandlung von Abgasen von einem Verbrennungsmotor, wobei das Verfahren ein Strömenlassen des Abgases durch eine Abgasanlage nach einem der Ansprüche 1 bis 10 umfasst, wobei das Abgas ein mageres Abgas umfasst, das intermittierend angereichert wird.

13. Verbrennungsmotor mit Kompressionszündung, der mit einer Abgasanlage nach einem der Ansprüche 1 bis 10 ausgerüstet ist.

14. Kraftfahrzeug, das einen Verbrennungsmotor mit Kompressionszündung nach Anspruch 13 umfasst.

## Revendications

1. Système d'échappement pour un moteur à combustion interne, le système d'échappement comprenant :
a. un piège à NOₓ pauvre ; et
b. un substrat monolithique à écoulement sur paroi ayant une porosité pré-revêtue supérieure ou égale à 40%, et comprenant une zone catalytique d'oxydation, la zone catalytique d'oxydation comprenant un métal du groupe du platine chargé sur un premier support, le premier support comprenant au moins un oxyde inorganique et un composé de zinc, dans lequel le premier support comprend au moins un composé de métal alcalino-terreux à une charge comprise dans la gamme de 3,18 à 7,06 g/L (90 à 200 g/ft³) et dans lequel le ou chaque composé de métal alcalino-terreux comprend un oxyde, un carbonate et/ou un hydroxyde de magnésium, de calcium, de strontium ou de baryum ou un mélange de deux quelconques ou plus de ces composés, de préférence dans lequel le composé de zinc est choisi parmi l'oxyde de zinc, le nitrate de zinc, le carbonate de zinc, l'hydroxyde de zinc ou un mélange de deux ou plus de ceux-ci.

2. Système d'échappement selon la revendication 1, dans lequel l'oxyde inorganique comprend de l'oxyde de cérium.

3. Système d'échappement tel que revendiqué dans l'une quelconque des revendications précédentes, dans lequel le premier support comprend en outre de l'alumine et/ou un aluminate.

4. Système d'échappement tel que revendiqué dans l'une quelconque des revendications précédentes, dans lequel le premier support comprend de l'alumine et de l'oxyde mixte de cérium-zirconium.

5. Système d'échappement selon l'une quelconque des revendications précédentes, dans lequel le métal du groupe du platine est choisi dans le groupe constitué par le platine, le palladium, le rhodium et des mélanges de deux quelconques ou plus de ceux-ci.

6. Système d'échappement selon l'une quelconque des revendications précédentes, dans lequel la zone de catalyseur d'oxydation est appliquée en une seule couche.

7. Système d'échappement selon l'une quelconque des revendications précédentes, comprenant en outre une zone de réduction catalytique sélective sur un substrat monolithique, la zone de réduction catalytique sélective comprenant du cuivre ou du fer chargé sur un deuxième support, le deuxième support comprenant un tamis moléculaire.

8. Système d'échappement selon la revendication 7, dans lequel : (i) la zone de catalyseur d'oxydation se trouve sur un premier substrat monolithique à écoulement sur paroi et la zone de réduction catalytique sélective se trouve sur un deuxième substrat monolithique ; ou (ii) la zone de catalyseur d'oxydation et la zone de réduction catalytique sélective se trouvent chacune sur des parties du même substrat monolithique à écoulement sur paroi, de préférence dans lequel la zone de catalyseur d'oxydation est disposée dans des canaux du substrat monolithique à écoulement sur paroi à partir d'une extrémité de celui-ci et la zone de réduction catalytique sélective est disposée dans des canaux du substrat monolithique à écoulement sur paroi à partir de l'autre extrémité de celui-ci.

9. Système d'échappement selon l'une des revendications précédentes, dans lequel le composé de zinc a une taille de particule selon d₉₀ comprise dans la gamme de 1 à 25 µm.

10. Système d'échappement selon l'une des revendications précédentes, dans lequel le métal du groupe du platine est présent à une charge comprise dans la gamme de 0,247 à 0,530 g/L (7 à 15 g/ft³).

11. Substrat monolithique à écoulement sur paroi catalytique, le substrat monolithique à écoulement sur paroi ayant une zone de catalyseur d'oxydation dessus, le substrat monolithique à écoulement sur paroi ayant une porosité pré-revêtue supérieure ou égale à 40%, la zone de catalyseur d'oxydation comprenant un métal du groupe du platine chargé sur un premier support, le premier support comprenant au moins un oxyde inorganique, et un composé de zinc, dans lequel le premier support comprend au moins un composé de métal alcalino-terreux à une charge comprise dans la gamme de 3,18 à 7,06 g/L (90 et 200 g/ft³) et dans lequel le ou chaque composé de métal alcalino-terreux comprend un oxyde, un carbonate et/ou un hydroxyde de magnésium, de calcium, de strontium ou de baryum ou un mélange de deux quelconques ou plus de ces composés.

12. Procédé de traitement des gaz d'échappement provenant d'un moteur à combustion interne, le procédé comprenant la circulation des gaz d'échappement à travers un système d'échappement selon l'une quelconque des revendications 1 à 10, dans lequel le gaz d'échappement comprend un gaz d'échappement pauvre devenant riche par intermittence.

13. Moteur à allumage par compression équipé d'un système d'échappement selon l'une quelconque des revendications 1 à 10.

14. Véhicule comprenant un moteur à allumage par compression selon la revendication 13.
